# DEMANDE DE BREVET EUROPEEN

(11) **EP 0 755 001 A1**
(43) Date de publication de la demande: **22.01.1997**
(21) Numéro de dépôt: 96401290.0
(22) Date de dépôt: 13.06.1996
(51) Int. Cl.: G06F 9/44

(54) **Architecture d'habillage d'applications pour une plate-forme informatique**

(30) Priorité: 21.07.1995 FR 9508851
(71) Demandeur: BULL S.A., 78430 Louveciennes (FR)
(72) Inventeur: Blochet, Marc, 78340 Les Clayes sous Bois (FR); Sitbon, Gérard, 94400 Vitry (FR); Bassier, Jean-François, 94370 Sucy en Brie (FR); Baillif, Christian, 92340 Bourg la Reine (FR)
(74) Mandataire: Gouesmel, Daniel

(57) **Abrégé**

Architecture (MO) d'habillage d'applications pour une plate - forme informatique (PL) constituée d'un réseau (RE) de machines sur lesquelles tournent une pluralité d'applications (APA) hétérogènes, dont les codes ne sont pas modifiables et dont chacune comporte une pluralité (IE) d'interfaces externes,
caractérisée en ce que, dans le but de modifier les caractéristiques de base de ces applications de manière transparente à l'utilisateur, elle comprend :
- a) un module (MIG) d'habillage ergonomique de pilotage centralisé des applications à interface graphique (GI),
- b) un module (MCF) de continuité de fonctionnement qui exécute des actions pour empêcher des dysfonctionnements de celles-ci
- c) un module (MSC) d'interception des dialogues entre ces composants en vue d'assurer leur sécurité logique et la comptabilisation des ressources consommées par l'utilisateur.

Applicable aux plates - formes d'entreprise.

## Description

La présente invention concerne une architecture d'habillage d'applications pour une plate - forme informatique constituée d'un réseau de machines sur lesquelles tournent une pluralité d'applications hétérogènes, dont les codes ne sont pas modifiables.

### LE DOMAINE TECHNIQUE

Les systèmes informatiques modernes sont bâtis sur des architectures réparties. Cela signifie que les services requis par une application sont situés sur plusieurs systèmes qui communiquent entre eux : transactionnels, systèmes de gestion de base de données, systèmes d'impression, annuaires, systèmes de sécurité,...etc. Cette distribution permet une grande souplesse d'utilisation et des gains importants de performance.

La tendance actuelle de développement des systèmes d'information d'entreprise (encore appelés "serveurs d'entreprise") est de constituer des plates - formes informatiques formées d'une pluralité d'éléments divers (par exemple de constructeurs et de modèles différents), à savoir, des composants matériels (processeurs, mémoires, périphériques. réseau), un système d'exploitation (operating system, en anglais), un système de communication (network system, en anglais), un système d'administration (management system), des logiciels intermédiaires (middleware, en anglais) formés par exemple par un gestionnaire de base de données et par un moniteur transactionnel distribué, et des applications client.

De telles plates - formes sont particulièrement bien adaptées pour les marchés dit des "grands comptes" qui regroupent de grands utilisateurs, à savoir grandes entreprises, grandes banques, grandes administrations, et qui requièrent les caractéristiques suivantes :
- un nombre important de transactions par seconde,
- une haute disponibilité du système,
- une indépendance par rapport aux fournisseurs,
- une interopérabilité entre les différents systèmes constituant la plate-forme.

Ces plates - formes sont, de fait, des systèmes dits "orientés vers la production" (en anglais "production oriented systems"). A ce titre, ils ont la même fonction que les grandes unités de traitement (en anglais, "mainframes") traditionnelles des grands constructeurs informatiques. Cela signifie qu'elles doivent exercer un haut niveau de contrôle sur les requêtes de services que demande le client - utilisateur (en anglais "customer service requests"). Une telle requête est une unité de travail (ce peut être un ordre de vente, une demande d'assurance, ou encore une demande de proposition - request for proposai - ) qui sert d'entrée à un processus d'entreprise. Les services de production fournis par de telles plates - formes combinent non seulement des transactions mais aussi l'accomplissement de tâches, la mise en files d'attente de messages, les flux de travail, l'ordonnancement par lots, et des moyens d'impression, l'ensemble de ces dispositions permettant de satisfaire la requête de services formulée par le client - utilisateur.

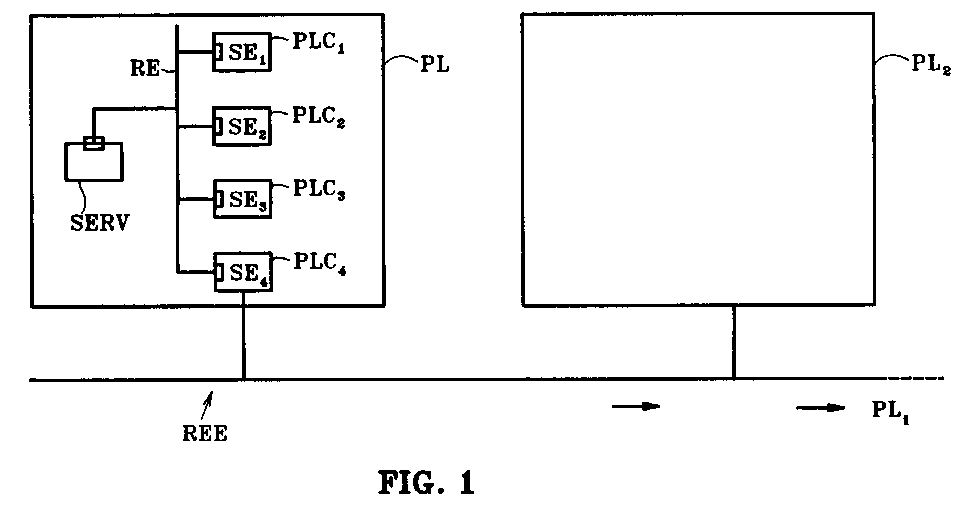

La figure 1 rappelle la structure générale d'une plate - forme d'entreprise répondant aux critères énoncés ci - dessus et le contexte technique global dans lequel elle s'insère.

Une telle plate - forme PL comprend une pluralité de systèmes informatiques plus communément appelés machines, avec leurs composants essentiels classiques, processeurs, unité centrale de traitement, entrées/sorties, périphériques, etc. Souvent, l'une des machines joue un rôle spécifique par rapport aux autres et est appelée plate - forme de commande ou encore serveur de commande SERV, les autres machines étant alors des machines - cibles ou encore plates - formes - cibles, à savoir PLC1, PLC2 ...PLCi, ...PLCn.

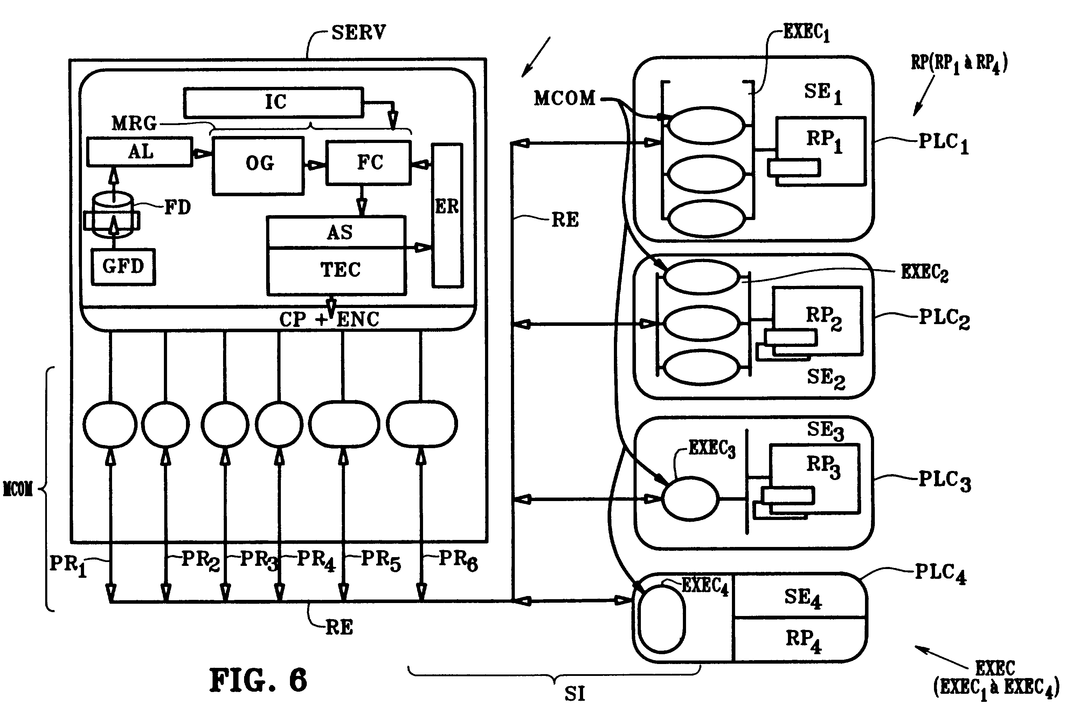

Le serveur SERV est relié par l'intermédiaire d'un réseau RE à PLC1 à PLCn, ici seulement représentées au nombre de 4 à la figure 6, pour simplifier. Ces 4 plates-formes sont donc PLC1 à PLC4. Chacune d'entre elles est supposée mettre en oeuvre un système d'exploitation (operating system, en anglais) différent SE1 à SE4.

Suivant le type de plate - forme - cible, on utilise sur le réseau RE un protocole de communication déterminé, étant entendu que le support physique des différentes liaisons de communication qui correspondent à chacune des plates - formes leur est commun, à savoir celui spécifique du réseau RE. Du côté du serveur SERV aussi bien que des machines - cibles PLC1 à PLC4, ces protocoles sont mis en oeuvre par des moyens de communication MCOM.

Dans la pratique courante, la plate - forme d'entreprise PL est également reliée par un réseau extérieur REE à d'autres plates - formes d'entreprise PL1, PL2, ...PLi, PLn. D'autres protocoles de communication que les protocoles internes à chaque plate - forme d'entreprise sont alors utilisés sur REE, l'un des plus couramment employés étant Internet (Internet Protocol, en anglais, en abrégé IP).

### LE PROBLEME POSE

La problématique de constitution d'une telle plate - forme est d'intégrer l'ensemble des éléments divers qui la constitue afin de fournir une solution opérationnelle au client utilisateur tout en améliorant les performances de chaque élément afin d'atteindre un objectif déterminé dans les attributs des serveurs d'entreprises, par exemple, sécurité logique, sécurité des données, comptabilisation des ressources utilisées, haute disponibilité et tolérance aux fautes, administration centralisée.

Dans ce cadre, l'un des problèmes essentiels à résoudre est de modifier les comportements des applications client et des logiciels intermédiaires, en les améliorant dans le sens indiqué ci - dessus alors que le concepteur du serveur d'entreprise ne maîtrise pas les codes source relatifs à ceux - ci.

Il n'existe pas actuellement sur le marché de solutions globales répondant aux critères mentionnés ci - dessus.

### L'OBJET DE L'INVENTION

La présente invention consiste en la définition et la réalisation d'une architecture permettant d'habiller chaque application grâce à un ensemble de moyens qui agissent sur les interfaces externes de celle - ci et qui surveille les éléments nécessaires à son déroulement.

Selon l'invention, l'architecture d'habillage d'applications et logiciels intermédiaires pour une plate - forme informatique constituée d'un réseau de machines sur lesquelles tournent une pluralité d'applications hétérogènes, dont les codes ne sont pas modifiables et dont chacune comporte au moins tout ou partie des interfaces externes suivantes :
- un fichier de configuration de celle - ci,
- un fichier journal qui répertorie les événements relatifs à celle - ci,
- un mécanisme de communication entre processus tournant sur cette (ces) machines,
- un ensemble de commandes permettant de modifier le comportement de celle - ci,
- un ensemble de ressources système permettant de la faire tourner,
- un ensemble de périphériques utilisés pour ses besoins en entrées/sorties de données,
est caractérisée en ce que, dans le but de modifier les caractéristiques de base de ces applications de manière transparente à l'utilisateur, en matière de sécurité, disponibilité, ergonomie, administrabilité, interopérabilité, surveillance, comptabilisation des ressources consommées par l'utilisateur, elle comprend :
- a) un module d'habillage ergonomique de pilotage centralisé des applications à interface graphique,
- b) un module de continuité de fonctionnement qui, par balayage périodique des fichiers journal et surveillance des composants des applications, exécute des actions pour empêcher des dysfonctionnements de celles - ci,
- c) un module d'interception des dialogues entre ces composants en vue d'assurer la sécurité logique des applications et la comptabilisation des ressources consommées par l'utilisateur.

D'autres caractéristiques et avantages de la présente invention apparaîtront dans la description suivante donnée à titre d'exemple non limitatif et en se référant aux dessins annexés. Sur ces dessins :
- La figure 1 rappelle comment sont constitués les systèmes d'information d'entreprise actuels dans le cadre desquels se situe l'invention,
- La figure 2 rappelle ce qu'est la structure générale d'une application,
- La figure 3 exprime le concept fondamental de l'invention,
- La figure 4 montre les éléments caractéristiques essentiels de l'invention ainsi que des modes de réalisation préférés de ceux - ci,
- La figure 5 montre, telle qu'elle apparaît sur écran, la fenêtre principale du module tableau de bord à interface graphique, élément caractéristique essentiel de l'invention,
- La figure 6 rappelle comment est constitué le module d'habillage de commandes à interface graphique appartenant au module d'habillage ergonomique à interface graphique,
- La figure 7 formée des figures 7a, 7b, montre deux exemples de réalisation de l'élément caractéristique essentiel assurant la sécurité de fonctionnement de l'architecture selon l'invention.

### DESCRIPTION D'UN EXEMPLE DE REALISATION DE L'INVENTION

### 1) RAPPELS:

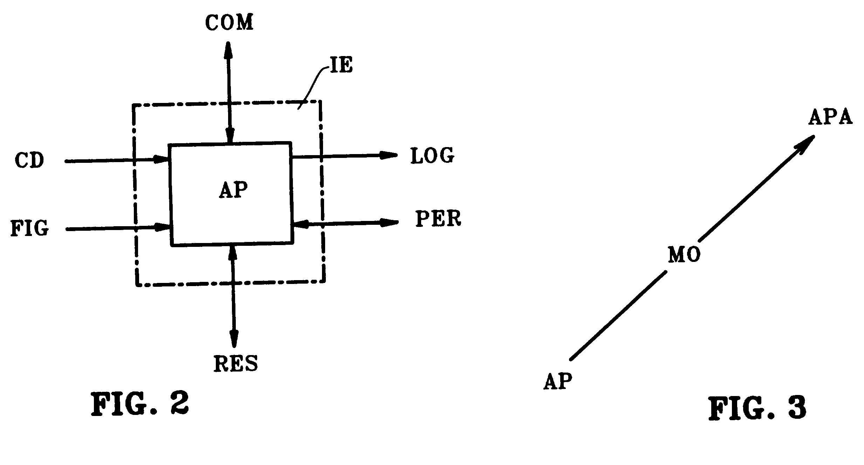

On considère la figure 2.

On considère donc une application AP représentée par le carré central de la figure 2, dont les côtés sont en traits noirs épais. Celle - ci est supposée tourner sur la plate - forme d'entreprise PL, non montrée sur cette même figure, pour simplifier. Cette dernière est par exemple du type défini ci - dessus en introduction en relation avec la figure 1, c'est - à - dire une plate - forme pour grands comptes, donc orientée "production".

Elle est donc formée d'une pluralité de machines de type divers disposées en réseau RE, sur lesquelles tournent des applications hétérogènes, parmi lesquelles AP.

Dans le cadre de l'invention, il est admis que les codes source de l'application AP ne sont en aucun cas modifiables.

AP comporte un ensemble IE d'interfaces externes qui lui permettent de communiquer avec tout ou partie des éléments constitutifs de PL. Celui - ci est symbolisé, figure 2, par l'espace situé entre d'une part, le carré en traits noirs inclinés interrompus et d'autre part, le carré en traits noirs épais symbolisant l'application AP. A ce titre, l'ensemble IE comprend, par exemple :
- un fichier FIG de configuration de AP,
- un ensemble CD de commandes ou d'API (sigle anglais de Application Programmatic Interface) permettant de modifier son comportement,
- un mécanisme COM de communication lui permettant de communiquer avec tous les processus locaux qui tournent sur PL, aussi bien qu'avec d'autres processus qui tournent sur d'autres plates - formes PL2, ..PLi,..distantes par l'intermédiaire du réseau externe REE,
- un fichier journal LOG où sont répertoriés dans le temps l'ensemble des événements qui sont relatifs à celle - ci,
- un ensemble RES de ressources système permettant de la faire tourner, composé de processus, de librairies, de files de messages, de processeurs de traitement de données, de mémoires, d'adaptateurs, etc.,
- un ensemble PER de périphériques utilisés pour ses besoins en entrées/sorties de données (imprimantes, disques, etc. ).

### 2) OBJECTIFS RECHERCHES PAR L'INVENTION :

Le but recherché par l'invention, symbolisé par la flèche de la figure 3 est d'accroître de manière sensible les performances de toutes les applications dont AP qui tournent sur PL, au moyen d'une architecture d'habillage d'applications plus volontiers appelée moniteur d'exploitation MO. Ceci s'effectue notamment dans le domaine de la sécurité, de la disponibilité, de l'ergonomie, administrabilité, de l'interopérabilité, de la surveillance ou encore de la comptabilisation des ressources consommées par l'utilisateur dans le but d'optimiser l'utilisation de celles - ci.

Ainsi, on passe, comme montré à la figure 3, de l'application AP à l'application "améliorée" APA, grâce au moniteur d'exploitation MO. On rappelle que l'utilisateur n'a pas accès au code source de AP et qu'il n'a aucune possibilité de le connaître. L'amélioration des performances est transparente pour l'utilisateur.

Plus précisément, en ce qui concerne les performances dans les domaines mentionnés ci - dessus, le moniteur MO doit avoir les caractéristiques suivantes :
- **maintenir la continuité du service requis,** malgré la présence de pannes, l'application restant bien sûr inchangée,
- **en matière de sécurité, des caractéristiques doivent être ajoutées à l'application pour prévenir tout accès à APA, de la part d'utilisateurs non autorisés,** sans aucun changement de cette dernière,
- **un système de visualisation graphique (plus communément appelé GUI, sigle anglais de Graphical User Interface) commun aux applications** : toutes les commandes et instructions (tutorials) doivent être programmées et traitées immédiatement au moyen de tous les aménagements de l'interface graphique, celle - ci étant plus particulièrement de type X/Motif (marque déposée),
- **gestion d'événements : les fichiers d'événements des applications, dits fichiers Logs, doivent être analysés de manière continue** par un processus de surveillance permanente (monitoring, en anglais) programmé et lorsque survient un événement déterminé, une action spécifique doit être entreprise,
- **fonctionnement automatique : toutes les requêtes des applications induisent un ensemble d'actions qui doivent être exécutées automatiquement sans la moindre intervention humaine.** Dans ce cadre, des caractéristiques dites de "fonctionnement automatique système " (en anglais "automated system operations", en abrégé, A.S.O.) doivent être programmées spécialement pour le cas des situations anormales,
- **comptabilisation/Performance : des informations fournies par l'application mesurant le degré d'utilisation des différents éléments système employés pour la faire tourner, sont collectés par des outils appropriés** appartenant à l'architecture selon l'invention, ces informations étant destinées à être utilisées par des outils de répartition de la charge de travail à effectuer par ces éléments en fonction du degré d'utilisation de ceux - ci à un moment donné. De tels outils sont par exemple décrits dans la demande de brevet français No. 94 14368 déposée le 30/11/94 par la société demanderesse sous le titre "outil d'aide à la répartition de la charge d'une application répartie".

Ainsi, en simplifiant les tâches et à travers l'automatisation, on réduit le coût d'exploitation de PL et on accroît son niveau de performances. La présentation uniforme des données spécifiques d'entreprise malgré l'hétérogénéité des éléments constitutifs de PL, jointe à la visualisation graphique des résultats, conduit à une efficacité améliorée des gestionnaires de administration de systèmes, une plus grande qualité de service, et à des temps de réponse nettement plus courts.

### 3) STRUCTURE DU MONITEUR D'EXPLOITATION MO :

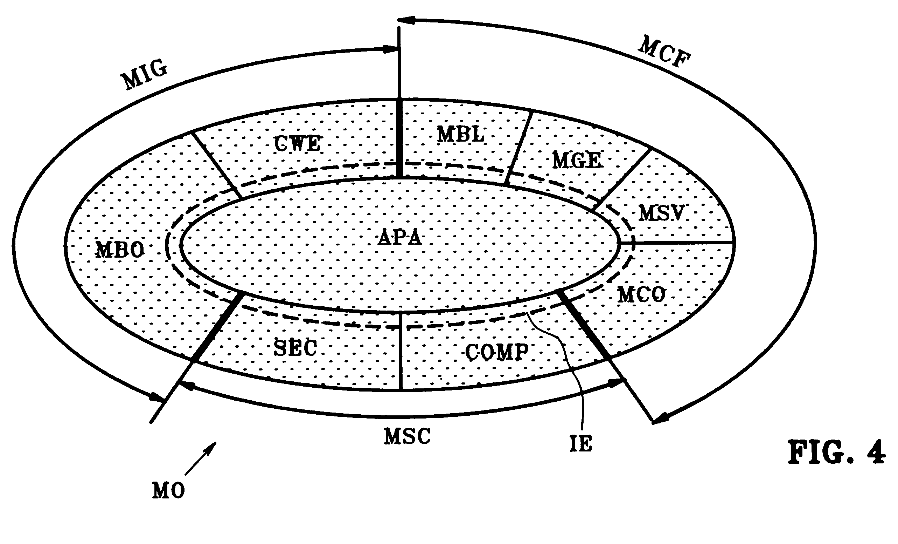

On considère donc la figure 4.

Sur cette figure, on fait apparaître sous forme elliptique aussi bien l'application aux performances améliorées APA, que l'ensemble IE d'interfaces externes qui l'entourent (qui est représenté en traits interrompus), et que le moniteur d'exploitation MO selon l'invention. APA et MO apparaissent symboliquement respectivement au centre et à la périphérie de la figure 4.

MO qui agit sur IE, ainsi qu'il a été dit plus haut, comprend les éléments caractéristiques essentiels suivants :
**A)** Le module MIG d'habillage ergonomique à interface graphique, qui effectue le pilotage centralisé de toutes les applications telle qu'APA,
**B)** Le module MCF qui assure la continuité de fonctionnement de PL lorsque tourne APA, en balayant périodiquement le fichier LOG et en surveillant les composants de cette dernière et qui, en fonction des résultats fournis par ce balayage et cette surveillance, exécute des actions pour éliminer des dysfonctionnements éventuels de cette application APA,
**C)** Le module MSC de sécurité et de comptabilisation qui intercepte les dialogues entre les différents composants de APA, afin d'assurer d'une part, la sécurité logique de APA et d'autre part la comptabilisation des ressources consommées par l'utilisateur de cette application.

### 4) STRUCTURE DETAILLEE DES MODULES DE MO:

### A) Le module MIG comprend :

- Le module MBO qui est un tableau de bord (dashboard, en anglais) à interface graphique, de préférence du type X/Motif, qui permet, depuis un poste centralisé, de piloter l'ensemble des applications telles que APA,
- Le module CWE d'habillages de commande utilisant la même interface graphique que MBO.

### 1) MBO est supporté par un ensemble de modules et d'icônes qui correspondent aux différentes applications qui peuvent tourner sur PL.

Deux possibilités sont offertes à l'utilisateur :
- une manière conventionnelle à travers laquelle il navigue dans un mode en cascades classique de fenêtres,
- un mode à une seule fenêtre suivant lequel les applications sont représentées le long d'un arbre unique permettant un accès direct à une application en cliquant une seule fois sur la souris associée à la console supportant l'interface graphique appelée GI.

Il est possible à l'utilisateur de passer à tout moment du mode conventionnel au mode à une seule fenêtre.

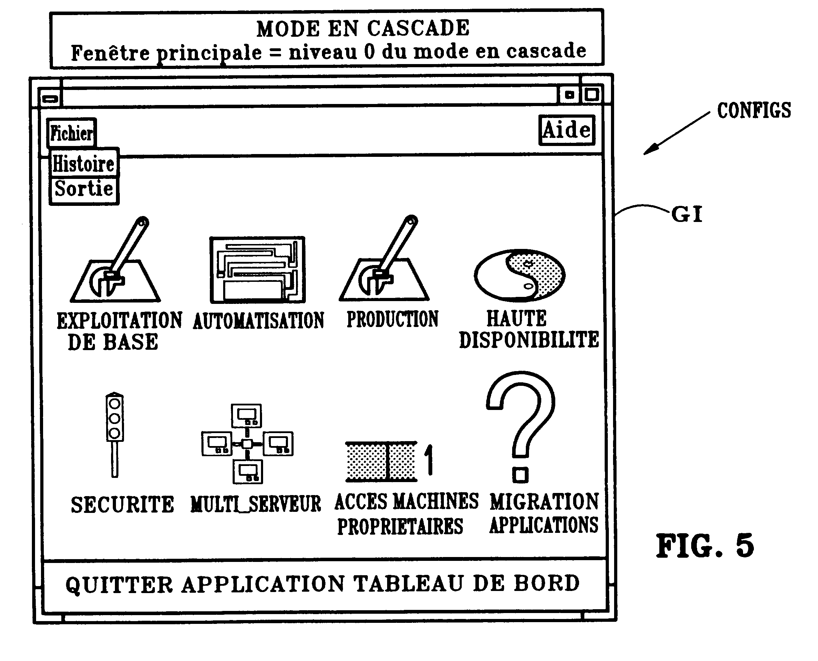

La figure 5 montre la fenêtre principale de MBO visualisée sur l'écran de l'interface graphique GI, suivant la manière conventionnelle.

Cette fenêtre représente le premier niveau dit niveau 0 de la succession de fenêtres en cascade qui peuvent se dérouler à partir de la celle - ci.

Le but de MBO est de gérer et d'administrer toutes les applications telles que APA, qui sont appelées à tourner sur PL, et ce, en donnant rapidement une vue complète et hiérarchisée de leur organisation par classe d'utilisation (par exemple la classe de toutes les applications dont la fonction essentielle est la gestion de la sécurité d'accès de tout ou partie des éléments de la plate - forme).

La description de cette organisation est séparée de l'interface graphique GI elle - même. Elle est faite dans un fichier CONFIGS de description de l'articulation en cascades des différentes fenêtres, fichier qui se situe sur la machine sur laquelle tourne GI, qui, de fait, est ici la plate - forme de commande SERV.

Ainsi, toute modification de cette description se reflète au chargement d'application qui la suit, sans qu'il y ait lieu de modifier la moindre ligne de l'application associée à l'interface graphique.

Cette particularité permet aux concepteurs de la plate - forme PL de décider, le plus tard possible et à tout moment, de modifier l'organisation de ces applications.

Si l'on revient à la figure 5, les différents icônes représentés ont la signification suivante.

En référence à cette figure, la description des icônes se fait ligne par ligne et de gauche à droite.

Le premier icône concerne l'exploitation basique (operation kernel, en anglais) de PL, c'est - à - dire la répartition des tâches (job scheduling, en anglais), la gestion des sauvegardes des fichiers, la gestion des impressions, la description du réseau, la gestion des événements, etc.

Le deuxième concerne l'exploitation automatique (automation, en anglais), par exemple répartition automatique des tâches selon la charge, scénario de commandes (script, en ang!ais) exécuté sur incident,

Le troisième concerne la production : applications de gestion de base de données, transactionnels etc.

Le quatrième concerne la haute disponibilité (high availability, en anglais).

Le cinquième (deuxième ligne) concerne la sécurité d'accès aux différents composants de PL.

Le sixième concerne la gestion de l'ensemble du réseau RE et des différentes plates - formes PLCi.

Le septième concerne l'accès aux PLCi de type grandes unités de traitement "propriétaire" (c'est - à - dire propres à chaque constructeur).

Le huitième concerne la migration des données et des applications (rehosting, en anglais).

2) On se reporte à la figure 6 qui rappelle ce que sont les principaux éléments constitutifs du module CWE et les grandes lignes de son fonctionnement, étant entendu que les structures et modalités détaillées respectives de ceux - ci et de celles - ci, sont contenues dans la demande de brevet NO. 94 14368 précitée. Il est entendu que, à la figure 6, on se situe dans le cadre de la plate - forme d'entreprise PL de la figure 1, formée de SERV et des plates - formes - cibles PLC1 à PLC4.

Les principales caractéristiques de CWE sont :
- un langage spécifique d'implantation de commandes (décrit en détail dans la demande de brevet précitée), avec un système de visualisation graphique commun pour toutes celles - ci,
- une exécution des commandes s'adaptant au contexte,
- utilisation d'une pluralité de protocoles de transport sur le réseau RE qui relie une pluralité de machines.

Les différents éléments constitutifs essentiels du module d'habillage de commandes CWE, qu'on peut appeler encore module (ou outil) de génération et d'exécution de commandes, sont donc :
- **le fichier descripteur FD** contenant la description de l'interface graphique à réaliser selon une grammaire propre à l'outil, associé à un éditeur GFD de fichiers descripteurs. Au fichier descripteur FD est associé l'éditeur GFD qui est un ensemble de fonctionnalités permettant de générer des fichiers descripteurs sans ou à partir d'un.autre fichier descripteur.
- **les moyens de vérification de la grammaire** assurant la cohérence lexicale du fichier descripteur, encore appelés **analyseur lexical AL,**
- **les moyens de génération d'une représentation graphique MRG**, connectés à un analyseur lexical AL d'une part, et à des moyens de contrôle syntaxique AS d'autre part,
- **Analyseur lexical AL** : il analyse les lignes du fichier descripteur FD et en fonction de la dite grammaire, génère un ensemble d'objets X/Motif (Marque déposée) ou un ensemble d'erreurs s'il y a incohérence dans le contenu du fichier descripteur.
- **les moyens de contrôle syntaxique** : des informations saisies par l'utilisateur sur la représentation graphique, encore appelés **analyseur de syntaxe AS,**
- **le commutateur de protocole CP associé à des moyens d'encapsulation ENC** des attributs de chaque commande à exécuter sur la (es) plate-forme (s)-cible (s), qui permet d'envoyer les commandes au moyen d'une pluralité de protocoles de communication, chaque protocole permettant de communiquer avec une plate-forme - cible déterminée.
- **les moyens** de réception des attributs de chaque commande et d'exécution de celle-ci selon ceux-ci, désignés par **EXEC**.

Les moyens de génération d'une représentation graphique comprennent, ainsi qu'il est visible à la figure 6 :
- des objets de gestion OG de l'interface graphique. Celle-ci, est de préférence, de type X/motif (Marque déposée).
- une fenêtre de commande FC associée aux objets de gestion OG, qui permet d'obtenir une représentation de la commande avec l'ensemble de ses paramètres. Ceci se fait au moyen du système de visualisation graphique de type X/Motif.

L'éditeur GFD, le fichier descripteur FD, les moyens de génération MRG, l'analyseur de syntaxe AS, et les moyens d'encapsulation ENC, qui sont associés aux moyens MCOM de communication (en fait, des moyens d'émission des commandes, pour ce qui est de SERV), sont contenus dans le serveur de commande SERV, associé à l'utilisateur.

Ce dernier contient également :
- l'interface contextuelle IC,
- des moyens de traitement d'erreurs TER,
- des moyens de tests d'existence de la commande, à savoir TEC.

L'interface contextuelle IC permet de transmettre, en fonction de l'environnement app!icatif, un ensemble d'informations à la fenêtre de commande FC , ce qui facilite la saisie des informations pour l'utilisateur final.

Les Moyens de tests d'existence de la commande TEC permettent, avant l'exécution d'une commande, de vérifier que celle-ci est bien disponible sur la machine - cible (PLC1 à PLC4, voir ci - dessous) en interrogeant cette dernière pendant l'opération de saisie de la commande .

Les Moyens de Traitement des erreurs TER, pour tous les cas d'erreurs, permettent de dialoguer avec l'utilisateur final qui saisit les paramètres dans la fenêtre de commande et demande l'exécution de la commande associée en lui signalant le type d'erreur. De même, ils traitent les erreurs résultant de l'exécution des commandes.

Le commutateur de protocole CP permet d'envoyer les paramètres de la commande grâce aux moyens de communication MCOM choisis par l'utilisateur. Ainsi qu'indiqué plus haut, le commutateur CP est étroitement associé à des moyens d'encapsulation de protocole ENC qui accompagnent les attributs de chaque commande des éléments spécifiques de chaque protocole. Dans l'exemple de réalisation montré à la figure 6, le nombre de protocoles choisis est de 6, à savoir PR1 à PR6.

Les moyens de réception et d'exécution EXEC sont associés à un répertoire de commandes RP.

A chacune des plates-formes PLC1 à PLC4, correspondent des moyens de réception et d'exécution de chaque commande spécifiques, à savoir EXEC1 à EXEC4. Par ailleurs, chacune d'entre elles possède un répertoire de commandes, à savoir RP1 à RP4. Ce dernier contient un ensemble de commandes dans lesquelles sont décrites les actions à effectuer en fonction des paramètres saisis par l'utilisateur final.

Il est évident que l'ensemble des moyens EXEC1 à EXEC4 forme les moyens de réception et d'exécution EXEC définis plus haut. De même, l'ensemble des répertoires de commandes RP1 à RP4 forme le répertoire de commande global RP défini plus haut.

### B) Le module MCF de continuité de fonctionnement comprend :

- un module MBL de balayage périodique des fichiers journal (LOG),
- un module MGE de définition et d'exécution d'actions sur la plate-forme suite à un événement produit par le module de balayage,
- un module MSV de surveillance des composants des applications, qui utilise le module MGE pour empêcher des dysfonctionnements éventuels de l'application,
- un module MCO de haute disponibilité assurant la continuité de service à l'utilisateur final de la plate - forme,

1) Le module MBL effectue une lecture périodique du contenu du fichier journal LOG de APA et transmet ces informations au module MGE, auquel il est étroitement associé.
2) Le module MGE, dès réception des informations transmises par MBL, analyse celles - ci, et lorsque il détecte des événements anormaux survenant dans le déroulement de APA, agit sur cette dernière pour en corriger l'anomalie qui produisait ces dits événements. Lorsqu'une action de correction se révèle nécessaire, aussitôt cette action effectuée, il déclenche une alarme qui avertit l'utilisateur que l'application APA a subi une modification de comportement. Dans une forme de réalisation préférée de l'invention, MGE est constituée par un module logiciel de type RSF commercialisé par la société demanderesse.
3) Le module MSV doit être capable de surveiller et d'agir sur tous les attributs de l'ensemble RES des différentes ressources de l'application. Son but est de lancer des actions suivant la connaissance qu'il a de ces attributs, lorsque ceux - ci remplissent une ou plusieurs conditions d'action. Dans la mesure du possible, pour des raisons de performance, l'action sera locale ( au niveau d'une machine déterminée PLCi) et non entreprise par le gestionnaire d'administration central de PL, même si une notification lui en est faite. La configuration des différents surveillants d'application est faite depuis ce gestionnaire.
4) Le module MCO qui assure la continuité de fonctionnement de APA fournit à la fois un outil de développement et un environnement d'exécution (runtime environment, en anglais) qui permet - soit de créer des applications distribuées fiables - soit, en étant appliqué à des applications distribuées existantes de leur fournir une très haute disponibilité par duplication - . De tels modules existent sur le marché. L'un de ceux - ci est par exemple commercialisé par la société ISIS DISTRIBUTED SYSTEM sous le nom de ISIS (marque déposée). Un autre l'est par la société demanderesse et par la société IBM sous le nom de HA - CMP.

### C) Le module de comptabilisation et de sécurité MSC comprend :

- un module de sécurité SEC qui intercepte les dialogues entre les processus en vue d'assurer leur sécurité logique,
- des moyens COMP de comptabilisation des ressources consommées par l'utilisateur.

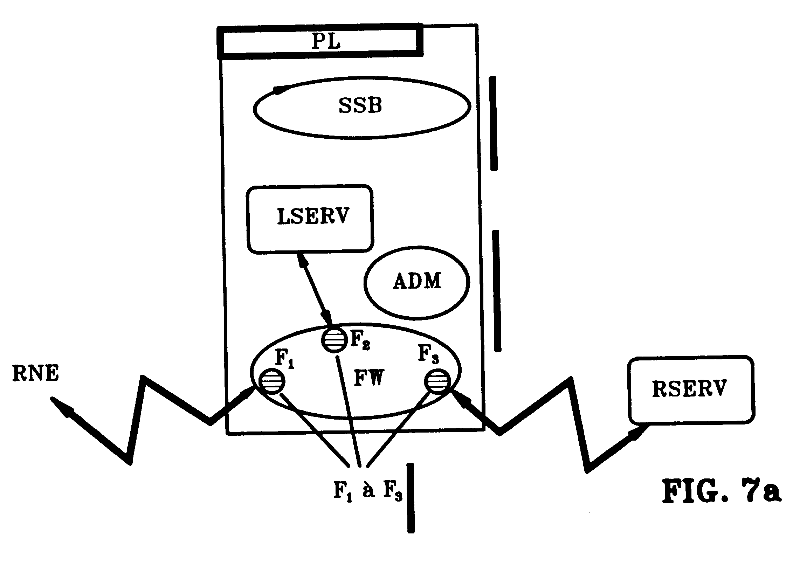

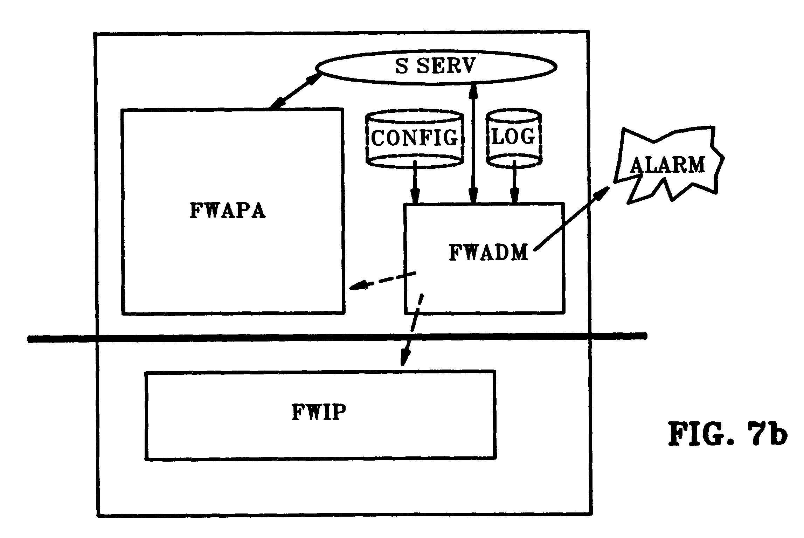

### 1) Le module de sécurité SEC utilise la technique dite du "coupe - feu", plus connue de l'homme du métier sous le vocable anglo - saxon de "firewall". Dans l'exemple de réalisation décrit ici, ce module est du type GAUNTLET, commercialisé par la société T.I.S.(Trusted Information System) . On se limitera donc ici à rappeler les principales fonctions et caractéristiques d'un tel module ainsi que son architecture générale en relation avec les figures 7a et 7b.

On en rappelle tout d'abord quelques définitions essentielles :
- Un "coupe - feu" (Firewall) est composé d'un filtre pour le protocole IP, associé à un filtre au niveau de chaque application et à un serveur de sécurité situé au niveau de PL.
- Un "coupe - feu" IP (IP Firewall) est chargé de filtrer toutes les communications au niveau du protocole utilisé au - dessus des interfaces de réseau, ces dernières étant par exemples de type ETHERNET(défini par norme ISO 8802.3), X - 25 (défini par avis du CCITT), FDDI (norme ANSI X3T9 - 5), etc., en fait les couches les plus basses du réseau.
- Les "coupe - feu" application (application Firewall) forment un ensemble de composants de l'application ou d'extension de l'application, qui filtrent les principaux services fournis par les couches hautes sur le protocole TCP (Transmission Control Protocol, défini par la norme RFC793 du standard UNIX - marque déposée) avec ses différentes variantes ftp, telnet, etc. (définies respectivement par les normes RFC 959 et 854 du standard UNIX - marque déposée).
- un serveur de sécurité est une machine (appartenant à l'une quelconque des PLi) qui a pour mission de fournir un service d'authentification en délivrant des jetons (tickets, en anglais) utilisables pour sécuriser les dialogues sur le réseau REE. Le coupe - feu utilise un serveur de ce type, pour éviter de laisser transiter des mots de passe à travers REE.

Les principales fonctions d'un "coupe - feu" sont, à certaines périodes, d'accepter ou de refuser l'accès à tout serveur tournant sur toute machine de PL, au bénéfice d'un client spécifique, de connecter un client de manière transparente à un serveur spécifique tournant sur une machine donnée de PL par son intermédiaire (le serveur est alors caché par la connexion au "coupe-feu"), d'authentifier des utilisateurs avec différent protocoles (avec mots de passe simple, mots de passe jetables dans le temps, etc.), d'accepter ou de refuser les requêtes des clients pour des serveurs de type ftp et web (appellation du réseau mondial IP en forme de toile d'araignée), de supporter le filtrage du trafic sur différentes interfaces de réseau (couches basses X25, FDDI, ETHERNET, etc.).

Par ailleurs, un "coupe - feu" doit pouvoir assurer la journalisation (log, en anglais) d'informations concernant le trafic sur le réseau IP et l'utilisation des serveurs propres à la machine PL, ou encore assurer l'administration des filtres d'applications telles qu'APA ou des filtres IP, à travers l'interface graphique GI du module MBO.

Si l'on se reporte à la figure 7a, on voit la plate - forme PL qui contient un coupe - feu FW muni de ses filtres F1, F2, F3, dont chacun est responsable du filtrage d'une application de type particulier, par exemple telnet, ftp, etc. Dans un dialogue de type "client/serveur" où le serveur appartient soit à un ensemble de serveurs locaux LSERV (sur une même plate - forme PL) soit à un ensemble de serveurs éloignés (appartenant à des plates - formes PLi autres que PL) RSERV, le "coupe - feu" FW intercepte et sécurise tout dialogue entre le client et LSERV ou RSERV.

Si l'on se reporte désormais à la figure 7b, on voit une structure plus détaillée du "coupe - feu" global FW. Il peut donc se décomposer en un "coupe-feu" FWIP au niveau du réseau Internet IP, en un ensemble de "coupe - feu" FWAPA au niveau des applications, en un serveur de sécurité SSERV relié au coupe - feu FWAPA. Le module d'administration FWADM du coupe - feu FW est relié à FWAPA, à SSERV, à FWIP, et aux différents fichiers de configuration FIG de PL ainsi qu'aux fichiers journal LOG et au système d'alarme ALARM de la plate - forme PL.

Les moyens de comptabilisation COMP permettent de comptabiliser l'ensemble des consommations de ressources utilisées par l'utilisateur de PL : processeur central, mémoires, disques, etc. Un serveur dans une application client/serveur tourne sans savoir nécessairement quel est l'utilisateur qui a requis son service.

En intercalant un module d'interception de dialogue du type coupe - feu ou encore du type décrit dans la demande de brevet No. 93 14288 déposée le 30/11/93 par la compagnie demanderesse, sous le titre "procédé de conversion automatique pour le portage d'applications de télécommunication du réseau TCP/IP sur le réseau OSI - CO et module utilisé dans ledit procédé", il est possible d'identifier l'utilisateur des services demandés et ainsi d'effectuer la comptabilisation des ressources consommées au bénéfice de cet utilisateur.

## Revendications

1. Architecture (MO) d'habillage d'applications (APA) pour une plate - forme d'entreprise (PL) informatique constituée d'un réseau interne (RE) de machines (PLC1 à PLC4) sur lesquelles tournent une pluralité d'applications hétérogènes (APA), dont les codes ne sont pas modifiables et dont chacune comporte au moins tout ou partie des interfaces externes (IE) suivantes :
- un fichier (FIG) de configuration de celle - ci,
- un fichier journal (LOG) qui répertorie les événements relatifs à celle-ci,
- un mécanisme (COM) de communication entre processus tournant sur cette (ces) machines,
- un ensemble (CD) de commandes permettant de modifier le comportement de celle - ci,
- un ensemble (RES) de ressources système permettant de la faire tourner,
- un ensemble (PER) de périphériques utilisés pour ses besoins en entrées/sorties de données,
caractérisée en ce que, dans le but de modifier les caractéristiques de base de ces applications de manière transparente à l'utilisateur, en matière de sécurité. disponibilité, ergonomie, administrabilité, interopérabilité, surveillance, comptabilisation des ressources consommées par l'utilisateur, elle comprend :
a) un module (MIG) d'habillage ergonomique de pilotage centralisé des applications (APA) à interface graphique (GI),
b) un module (MCF) de continuité de fonctionnement qui, par balayage périodique des fichiers journal et surveillance des composants des applications (APA), exécute des actions pour empêcher des dysfonctionnements de celles - ci,
c) un module (MSC) d'interception des dialogues entre ces composants en vue d'assurer la sécurité logique des applications (APA) et la comptabilisation des ressources consommées par l'utilisateur.

2. Architecture d'habillage selon la revendication 1, caractérisée en ce que le module (MIG) d'habillage ergonomique comprend :
- un module (MBO) tableau de bord qui pilote l'ensemble des applications,
- un module (CWE) d'habillage de commandes à interface graphique,

3. Architecture d'habillage selon la revendication 1, caractérisée en ce que le module de continuité (MCF) comprend :
- un module (MBL) de balayage périodique des fichiers journal (LOG),
- un module (MGE) de définition et d'exécution d'actions sur la plate-forme suite à un événement produit par le module de balayage,
- un module (MSV) de surveillance des composants des applications, qui utilise le module de définition pour empêcher tout dysfonctionnement de l'application,
- un module (MCO) de haute disponibilité assurant la continuité de service à l'utilisateur final de la plate - forme,

4. Architecture d'habillage selon la revendication 1, caractérisée en ce que le module d'interception (MSC) comprend :
- un module de sécurité (SEC) qui intercepte les dialogues entre les processus en vue d'assurer leur sécurité logique,
- des moyens (COMP) de comptabilisation des ressources consommées par l'utilisateur.

5. Architecture d'habillage selon la revendication 2, caractérisée en ce que le module (MBO) tableau de bord comprend un ensemble de modules et d'icônes qui correspondent aux différentes applications qui peuvent tourner sur la plate-forme d'entreprise (PL), pour lequel deux possibilités sont offertes à l'utilisateur :
- un premier mode à travers lequel il navigue dans un mode en cascades de fenêtres,
- un second mode à une seule fenêtre suivant lequel les applications sont représentées le long d'un arbre unique permettant un accès direct à une application en cliquant une seule fois sur la souris associée à l'interface graphique,
l'utilisateur pouvant passer à tout moment du mode conventionnel au mode à une seule fenêtre et réciproquement.

6. Architecture d'habillage selon la revendication 5, caractérisée en ce que, dans le premier mode, le module tableau de bord (MBO) gère et administre toutes les applications (APA), qui sont appelées à tourner sur la dite plate - forme (PL), en donnant une vue complète et hiérarchisée de leur organisation par classe d'utilisation, la description de cette organisation, séparée de l'interface graphique (GI) elle - même, étant faite dans un fichier (CONFIGS) de description de l'articulation en cascades des différentes fenêtres, fichier qui se situe sur la machine sur laquelle tourne l'interface graphique (GI).

7. Architecture d'habillage selon la revendication 2, caractérisée en ce que, le réseau (RE) supportant une pluralité de protocoles de communication (PR1 à PR6) et la plate - forme (PL) comportant une plate - forme de commande (SERV) et des plates - formes - cibles (PLC1 à PLC4), le module (CWE) d'habillage de commandes à interface graphique (GI) comprend :
- un fichier descripteur (FD) contenant la description de l'interface graphique (GI) à réaliser selon une grammaire propre au module d'habillage (CWE),
- des moyens de vérification de la grammaire (AL) assurant la cohérence lexicale du fichier descripteur (FD),
- des moyens de génération d'une représentation graphique (MRG), connectés aux moyens de vérification d'une part, et aux outils de l'interface graphique d'autre part,
- des moyens de contrôle syntaxique (AS) des informations saisies par l'utilisateur sur la représentation graphique,
- des moyens d'encapsulation (ENC) des attributs de chaque commande à exécuter sur la (es) plate-forme (s) cible (s) (PLC1 à PLC4), pour une pluralité de protocoles de communication (PR1 à PR6),
- des moyens de réception des attributs de chaque commande et d'exécution (EXEC1 à EXEC4) de celle-ci selon ceux-ci.

8. Architecture d'habillage selon la revendication 4, caractérisée en ce que, la plate -forme d'entreprise (PL) étant reliée à d'autres plates -formes d'entreprises qui lui sont externes par l'intermédiaire d'un réseau externe (REE) et possédant un système d'alarme (ALARM), le module de sécurité (SEC) est formé par un "coupe - feu global" (FW) qui possède un module d'administration (FWADM) et qui se décompose en un "coupe - feu réseau" (FWIP) au niveau du réseau externe (REE), en un ensemble de "coupe - feu application" (FWAPA) au niveau des applications (APA), et en un serveur de sécurité (SSERV) propre à la plate-forme- d'entreprise (PL) relié au "coupe - feu application" (FWAPA,) le module d'administration (FWAD) étant relié à l'ensemble de "coupe - feu application" (FWAPA), au serveur de sécurité (SSERV), au "coupe - feu réseau" (FWIP), et aux fichiers de configuration (FIG) de la plate - forme PL ainsi qu'aux fichiers journal (LOG) et au système d'alarme (ALARM).
